# EUROPÄISCHE PATENTSCHRIFT

(11) **EP 3 004 660 B1**
(45) Veröffentlichungstag und Bekanntmachung des Hinweises auf die Patenterteilung: **19.07.2017**
(21) Anmeldenummer: 14725011.2
(22) Anmeldetag: 13.05.2014
(51) Int. Cl.: F16B 7/04

(54) **VORRICHTUNG ZUM VERBINDEN VON PROFILELEMENTEN**
DEVICE FOR CONNECTING PROFILE ELEMENTS
DISPOSITIF POUR RELIER DES ÉLÉMENTS PROFILÉS

(30) Priorität: 06.06.2013 DE 102013009564
(43) Veröffentlichungstag der Anmeldung: 13.04.2016
(73) Patentinhaber: Liebherr-Werk Biberach GmbH, 88400 Biberach/Riß (DE)
(72) Erfinder: KRUPINSKI, Jacek, 54292 Trier (DE); STANGER, Norbert, 88448 Attenweiler (DE)
(74) Vertreter: Herrmann, Uwe
(86) Internationale Anmeldenummer: PCT/EP2014/001292
(87) Internationale Veröffentlichungsnummer: WO 2014/194980

(56) Entgegenhaltungen:
- GB-A- 580 478
- GB-A- 724 800

## Beschreibung

Die vorliegende Erfindung betrifft eine Vorrichtung zum Verbinden von Profilelementen sowie entsprechende Verwendungen der Vorrichtung.

Bei der Verbindung von Profilelementen ist es bekannt, als Verbindungselement ein homogenes Bauteil zu verwenden, das eine vergleichbare Festigkeit wie das Material der verbundenen Profilelemente selbst aufweist und in diese zum Herstellen einer Verbindung zwischen den beiden Profilelementen eingeführt wird. Typischerweise können dabei bei einem beispielhaften Kran zwei Gurtelemente aus Stahl von einem ebenfalls stählernen Verbindungselement zusammengehalten werden.

Als problematisch kann sich dabei erweisen, dass zum Gewähren einer hinreichenden Festigkeit der Verbindung der Profilelemente ein nachteilig großes Verbindungselement bereitgestellt werden muss, was sich direkt nachteilig auf die Größe der zu verbindenden Profilelemente auswirkt. So müsse diese ausreichend groß dimensioniert sein, um das große Verbindungselement aufzunehmen.

Aus der GB 580 478 A ist ein Profilelement bekannt, das alle Merkmale des Oberbegriffs des Anspruchs 1 umfasst.

Aufgabe der Vorliegenden Erfindung ist es daher, eine Vorrichtung zum Verbinden von Profilelementen bereitzustellen, welche die bekannten Vorrichtungen vorteilhaft weiterbildet, insbesondere hinsichtlich der Festigkeit der Verbindung der Profilelemente.

Diese Aufgabe wird erfindungsgemäß durch eine Vorrichtung mit den Merkmalen des Anspruchs 1 gelöst, wonach eine Vorrichtung zum Verbinden von Profilelementen vorgesehen ist, insbesondere von Metallprofilelementen, wobei die Vorrichtung wenigstens zwei miteinander zu einem Blechpaket verbundene Bleche mit miteinander fluchtenden Durchführungen und wenigstens zwei Bolzen aufweist, und wobei das Blechpaket in zwei zu verbindenden Profilelemente einführbar und mit diesen mittels der wenigstens zwei Bolzen vorzugsweise lösbar verbindbar ist. Zudem sind die Bleche aus hochfestem Stahl hergestellt.

Die Verwendung eines Blechpakets als Verbindungselement, welches aus gegebenenfalls auch unterschiedlichen Blechen besteht, ermöglicht vorteilhafterweise eine größere Flexibilität bei der Ausgestaltung des Verbindungselements, unter anderem hinsichtlich Dimensionierung und Materialwahl.

Gemäß der Erfindung sind die Bleche aus hochfestem Stahl hergestellt. Zur Herstellung der Bleche kann zum Beispiel ein Stanzprozess genutzt werden, welcher sowohl hinsichtlich der erreichbaren Toleranzen als auch hinsichtlich der Festigkeit der verwendbaren Materialien den Üblichen Herstellungsprozessen, wie zum Beispiel Spannabhebenden Verfahren, überlegen ist.

In einem weiteren bevorzugten Ausführungsbeispiel ist ferner denkbar, dass die Bleche verklebt und/oder genietet sind. Auf diese Weise kann sichergestellt werden, dass die Bleche, welche eine kraftübertragende Funktion in der Verbindung der Profilelemente haben, möglichst gemeinsam belastbar sind, so dass es zu keiner oder jedenfalls einer möglichst geringen Ungleichmäßigkeit in der Belastung der einzelnen Bleche kommt.

In einem besonders bevorzugten Ausführungsbeispiel ist dabei denkbar, dass in den Blechen Nietenlöcher für Nieten vorgesehen sind, mittels derer die Bleche zu dem Blechpaket verbunden sind. Bleche mit entsprechend bereitgestellten Nietenlöchern ermöglichen eine vorteilhaft einfache Herstellung der Blechpakete. Die Nietenlöcher können dabei zum Beispiel schon während des Stanzprozesses zur Herstellung der Bleche in die Bleche eingelassen werden, so dass zur Montage der Blechpakete keine unter Umständen großformatige Nietvorrichtung notwendig ist.

In einem weiteren bevorzugten Ausführungsbeispiel ist denkbar, dass die Durchführungen für Bolzen unterschiedlich dimensioniert sind. So ist dabei zum Beispiel eine Konfiguration einfach herstellbar, bei der weiter innen liegende Bleche eines Blechpakets größere Durchführungen für Bolzen aufweisen, als weiter außen liegende Bleche. Wie im Folgenden noch gezeigt wird, kann dies dann besonders vorteilhaft sein, wenn zum Gestalten einer besseren Belastungssituation innerhalb des Blechpakets ein derartiger Blechpaketaufbau zweckdienlich ist.

Ein weiterhin bevorzugtes Ausführungsbeispiel kann ferner derart ausgestaltet sein, dass die Bleche unterschiedliche und/oder identische Blechstärken aufweisen. Ein entsprechendes Blechpaket mit Blechen unterschiedlicher Stärken ermöglicht es bei der Konstruktion des Blechpakets die Verformung der Bolzen unter Belastung beziehungsweise deren Biegelinie zu berücksichtigen und ein Blechpaket bereitzustellen, welches in Abhängigkeit von der Stärke der einzelnen Bleche Zonen mit unterschiedlichem Dehnungsverhalten aufweist. Vorteilhafterweise kann so das Blechmaterial besser genutzt werden und ein insgesamt kleineres Verbindungselement bereitgestellt werden.

Ferner ist ein bevorzugtes Ausführungsbeispiel denkbar, bei dem innerhalb des Blechpakets wenigstens eine Hülse angeordnet ist. Die Hülse kann dabei vorteilhafterweise dazu ausgelegt sein, die Lasten zwischen Blechpaket und Bolzen so zu übertragen, dass zum Beispiel eine möglichst gleichmäßige Belastung der einzelnen Bleche gewährleistet wird.

Dabei ist in einem besonders bevorzugten Ausführungsbeispiel denkbar, dass die wenigstens eine Hülse abgestuft ist und unterschiedliche Bleche des Blechpakets in unterschiedlichen Abständen von einer Hülsenachse mit Lasten beaufschlagbar sind. Hierdurch wird vorteilhafterweise eine noch bessere Verteilung der Belastung zwischen den einzelnen Blechen ermöglicht.

Dabei ist ein Ausführungsbeispiel bevorzugt, in dem die Hülse vorwiegend in einem mittleren Bereich des Blechpakets angeordnet ist. Auf diese Weise ist es möglich, die besondere Bauweise des Blechpakets dahingehend zu nutzen, dass die innenliegende Hülse vorteilhaft einfach innerhalb des Blechpakets einlagerbar und dort feststellbar ist. Es kann zum Beispiel auf spezielle Vorkehrungen zum Feststellen der Hülse verzichtet werden.

Die Erfindung richtet sich ferner auf die Verwendung einer Vorrichtung nach einem der Ansprüche 1 bis 9 zum Verbinden zweier Profilelemente, insbesondere zweier Metallprofilelemente. Hierbei und in den folgenden Ausführungsbeispielen treten die weiter oben genannten Vorteil der Erfindung auf.

In einem bevorzugten Ausführungsbeispiel kann ferner vorgesehen sein, dass die Profilelemente Hohlprofile sind.

Weiterhin kann in einem anderen bevorzugten Ausführungsbeispiel vorgesehen sein, dass die Profilelemente Bestandteile einer Maschine, vorzugsweise einer Baumaschine und besonders bevorzugt eines Turmdrehkrans sind.

Des Weiteren ist die Erfindung auch auf eine Maschine gerichtet, insbesondere einen Turmdrehkran, wobei der Turm und/oder der Ausleger des Turmdrehkrans wenigstens zwei Gurte umfasst, die mittels einer Vorrichtung nach einem der Ansprüche 1 bis 9 verbunden sind.

Schließlich richtet sich die Erfindung auf ein Set aus Maschine, wenigstens zwei Profilelementen und wenigstens einer Vorrichtung nach einem der Ansprüche 1 bis 9.

Weitere Einzelheiten und Vorteile der Erfindung sollen nun anhand von in den Figuren dargestellten Ausführungsbeispielen näher erläutert werden. Es zeigen:
- Figur 1:: verschiedene Ausführungsformen von Blechen;
- Figur 2a:: verklebtes Blechpaket;
- Figur 2b:: vernietetes Blechpaket;
- Figur 3:: unterschiedliche Blechpakete;
- Figur 4a:: Vorrichtung zum Verbinden von Profilelementen nach Stand der Technik;
- Figur 4b:: verbesserter Vorrichtung zum Verbinden von Profilelementen;
- Figuren 5a, 5b:: Blechpakete mit Blechen unterschiedlicher und gleicher Blechstärken in belastetem und unbelastetem Zustand;
- Figuren 6a, 6b:: Blechpakete mit Blechen unterschiedlicher und gleicher Blechstärken in belastetem Zustand;
- Figuren 7a, 7b:: verschiedene Kombinationen von Blechpaketen, Hülsen, Bolzen;
- Figuren 8a, 8b:: verschiedene Kombinationen von Blechpaketen, abgestuften Hülsen, Bolzen;
- Figuren 9a, 9b:: genauere Darstellung der Blechpakete Figuren 8a und 8b

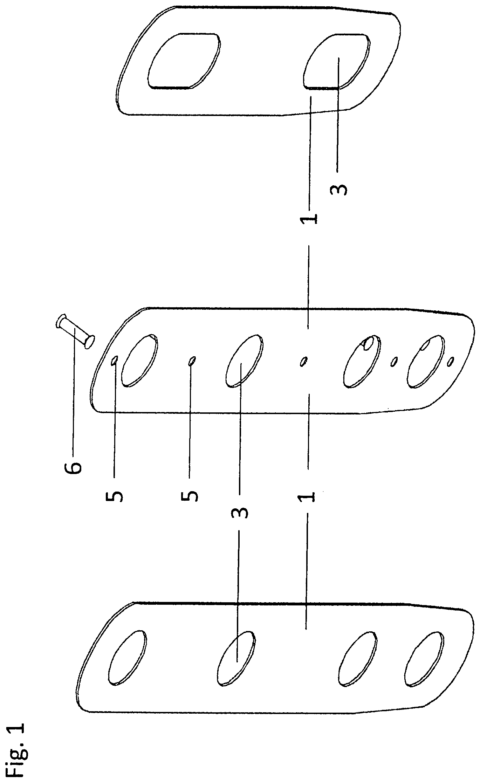

Figur 1 zeigt beispielhafte Ausführungsformen von Blechen 1. Mehrere ähnliche oder identische Bleche 1 können dabei, wie im Folgenden gezeigt wird, zu einem Blechpaket 2 verbunden werden. Zu erkennen sind dabei Durchführungen 3 zum Durchführen von im Folgenden gezeigten Bolzen 4 sowie Nietenlöcher 5 für Nieten 6, mit denen gegebenenfalls mehrere Bleche 1 verbunden werden können. Die Durchführungen 3 können dabei prinzipiell unterschiedliche Formen aufweisen. Denkbar sind zum Beispiel zylindrische oder längliche Durchführungen 3.

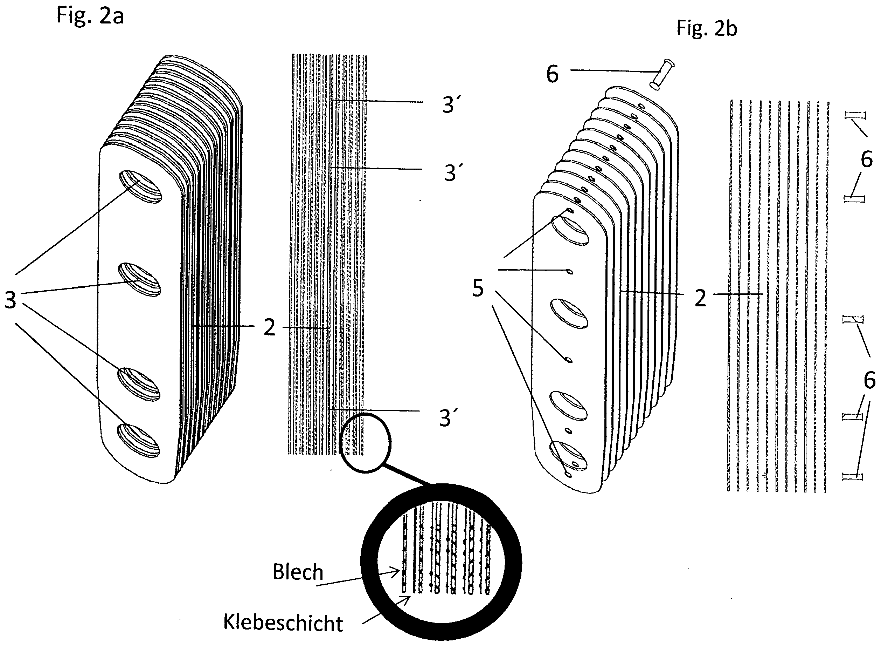

Figur 2a zeigt ein Ausführungsbeispiel, in dem eine Mehrzahl von Blechen 1 zu einem Blechpaket 2 verklebt ist. Hierbei wechselt jeweils eine Klebeschicht und eine Blechschicht miteinander ab und die Durchführungen 3 der Bleche 1 sind so angeordnet, dass das gesamte Blechpaket 2 aus den einzelnen Durchführungen 3 zusammengesetzte Durchführungen 3' aufweist.

Figur 2b zeigt dagegen ein vernietetes Blechpaket 2, bei dem im gezeigten Ausführungsbeispiel fünf Nieten 6 durch entsprechende Nietenlöcher 5 gesetzt sind, und so das Blechpaket 2 ohne Verklebung zusammenhalten. Denkbar ist dabei aber auch eine Kombination von Verklebung und Vernietung des Blechpakets 2 oder andere geläufige Verbindungsmethoden.

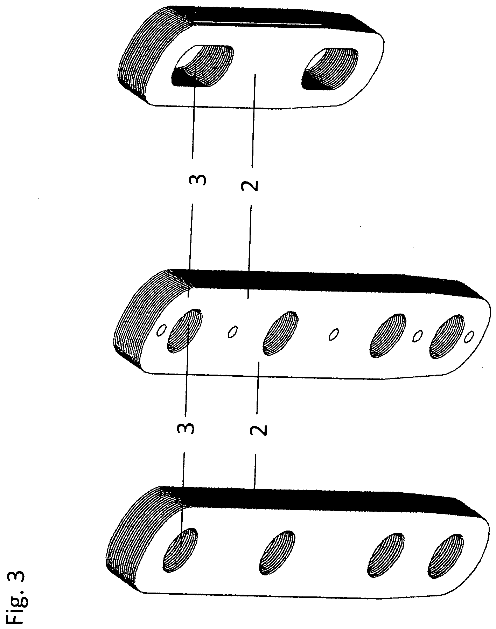

Figur 3 zeigt Blechpakete 2 in unterschiedlichen Ausführungsformen, die geklebt oder genietet sein können und Durchführungen 3 unterschiedlicher Geometrien aufweisen können.

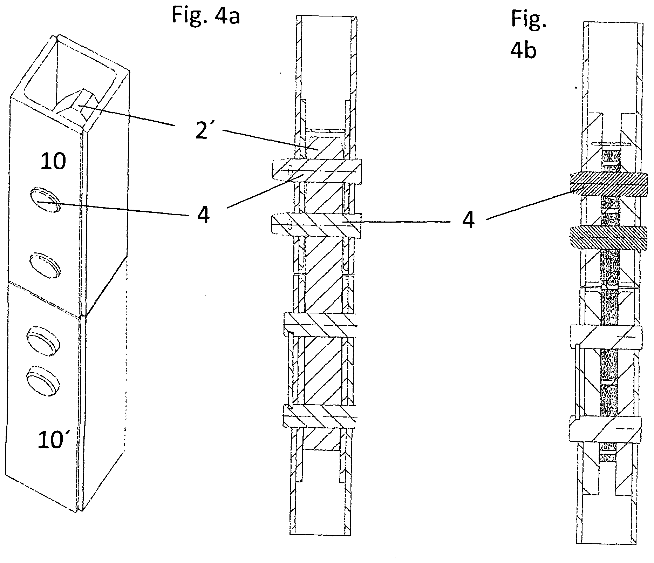

Figur 4a zeigt eine Vorrichtung zum Verbinden von Profilelementen nach dem Stand der Technik. Hierbei werden zwei zu verbindende Profilelemente 10 und 10' mittels eines homogenen Verbindungselementes 2' aus Stahl und Bolzen 4 miteinander verbunden. Die Festigkeit des Verbindungselementes 2' ist dabei vergleichbar mit der Festigkeit der beiden Profilelemente 10 und 10'.

Figur 4b zeigt im Unterschied dazu eine erfindungsgemäße Vorrichtung, wobei es durch die Verwendung von Blechen 1 aus hochfesten Stählen, die gestanzt und übereinander geschichtet zu Blechpaketen 2 verklebt oder genietet werden, möglich ist, ein wesentlich kleineres Verbindungselement 2' bereitzustellen, das aufgrund der höheren Festigkeit des Materials die gleiche Festigkeit aufweist, wie ein Verbindungselement 2' nach dem Stand der Technik.

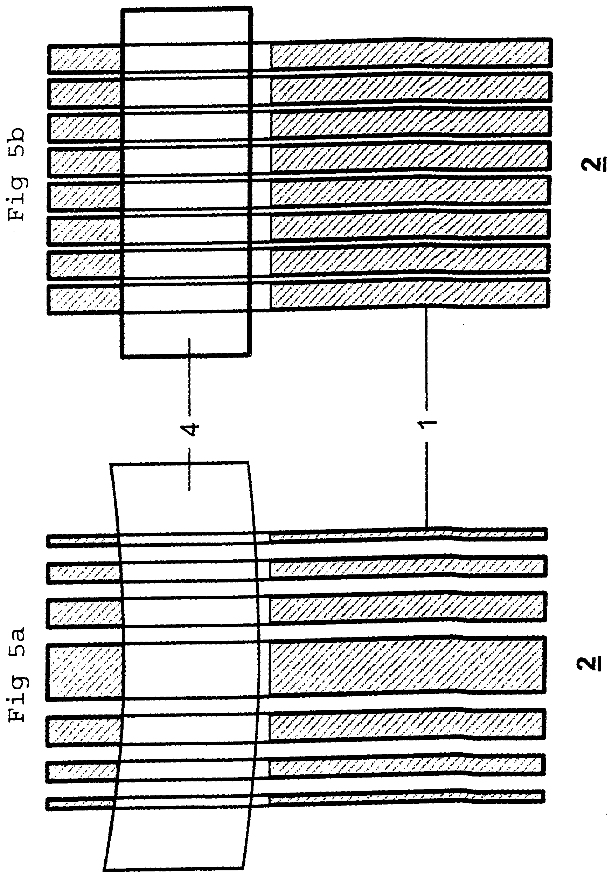

Figur 5a zeigt, dass die Bleche 1 mit unterschiedlichen und/oder gleichen Blechstärken zu einem Blechpaket 2 verbindbar sind. Hierdurch kann das unterschiedliche Streckungsverhalten der unterschiedlich starken Bleche 1, insbesondere im belasteten Zustand des Bolzens 4, genutzt werden, um eine bessere Passung des Bolzens 4 an das Blechpaket 2 zu ermöglichen.

Figur 5b zeigt ein verbolztes Blechpaket 2 in einem unbelasteten Zustand.

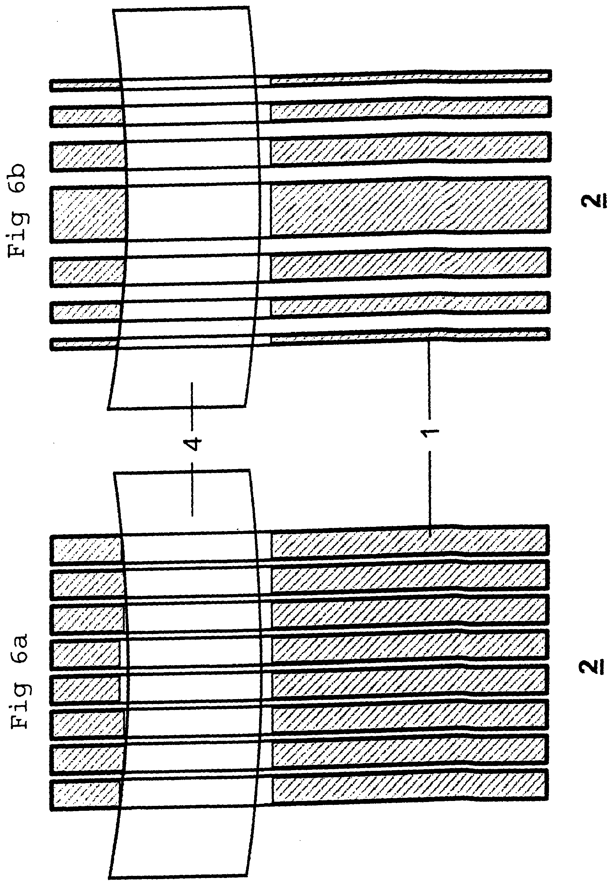

Der Unterschied zwischen einem Blechpaket 2 mit Blechen 1 unterschiedlicher Stärken und einem Blechpaket 2 mit Blechen 1 gleicher Stärken wird in den Figuren 6a und 6b deutlich. Während in Figur 6a die äußeren Bleche 1 die am weitesten gedehnten Bleche 1 des Blechpakets 2 sind, biegt sich der Verbindungsbolzen 4 aufgrund der Zuglast im Blechpaket 2 so stark durch, dass die mittleren Bleche 1 vom Bolzen 4 nicht mehr mit einer Last beaufschlagt werden und eine Krümmung beziehungsweise Biegung des Bolzens 4 mit dem Betrag x vorliegt. Dies bedeutet, dass die äußeren Bleche 1 die Hauptlast der Belastung des Blechpakets 2 tragen und somit am stärksten beansprucht sind. Diese heterogene Belastung der Bleche 1 im Blechpaket 2 ist dahingehend nachteilig, dass somit die äußeren Bleche 1 ein erhöhtes Bruchrisiko aufweisen. Um dem zu begegnen wird, wie in Figur 6b gezeigt, ein Blechpaket 2 mit Blechen 1 unterschiedlicher Blechstärken bereitgestellt. Die in der Mitte des Blechpakets 2 angeordneten Bleche 1 mit größeren Blechstärken sind dabei so auf die Biegelinie des Bolzens 4 abgestimmt, dass das Dehnungsverhalten der Bleche 1 mit der Biegelinie des Bolzens 4 übereinstimmt und der Bolzen 4 nur noch um einen Betrag x1 gebogen wird. Somit wird verhindert, dass, wie in Figur 6a gezeigt, in der Mitte angeordnete Bleche 1 den Kontakt zum Bolzen 4 verlieren.

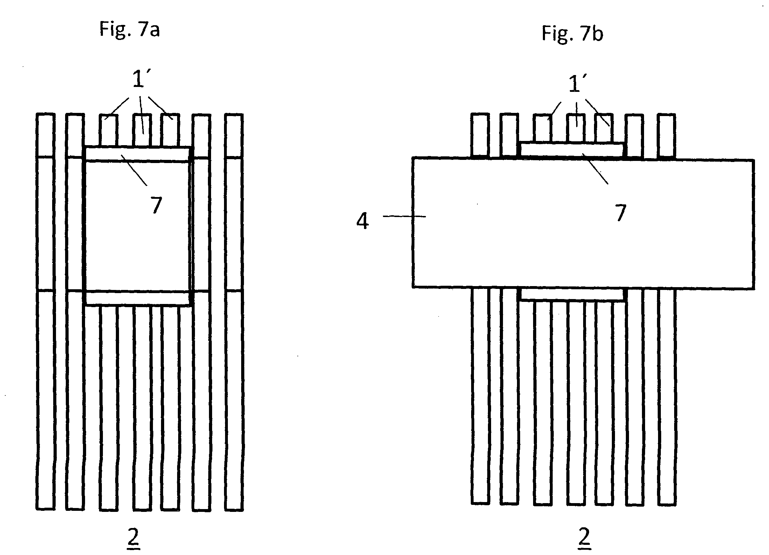

Figur 7a zeigt ein Ausführungsbeispiel, in welchem eine Hülse 7 in die Durchführungen 3 bzw. 3' eingelassen ist. Hierfür weisen innere Bleche 1' größer dimensionierte Durchführungen 3 auf. Sind die Bleche 1 fest zu einem Blechpaket 2 verbunden, so ist damit gleichzeitig die Hülse 7 in dem Blechpaket 2 festgestellt. Ein Bolzen 4 kann dann, wie in Figur 7b gezeigt, durch Blechpaket 2 und Hülse 7 hindurch gesteckt werden.

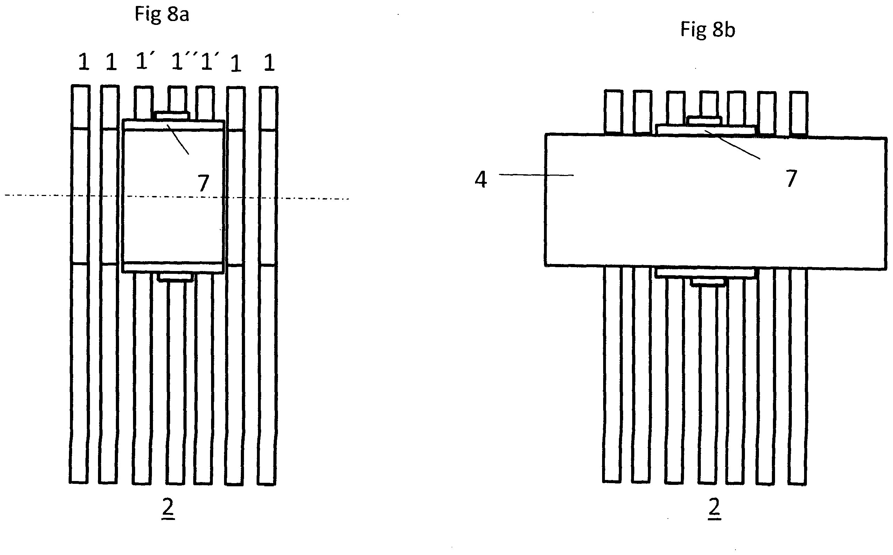

In einem dazu alternativen Ausführungsbeispiel ist denkbar, dass die Hülse 7 als abgestufte Hülse 7 ausgeführt ist und zum Feststellen der Hülse 7 im Blechpaket 2 Bleche 1 mit Durchführungen 3 mit variablen Durchmessern vorgesehen sind. Wie in Figur 8a zu erkennen, weist ein innerstes Blech 1" eine Durchführung 3 mit dem größten Durchmesser aller Durchführungen 3 des Blechpakets 2 auf. Die Bleche 1' weisen demgegenüber eine Durchführung 3 mit geringerem Durchmesser auf und die restliche Bleche 1 weisen Durchführungen mit den geringsten Durchmessern des Blechpakets 2 auf.

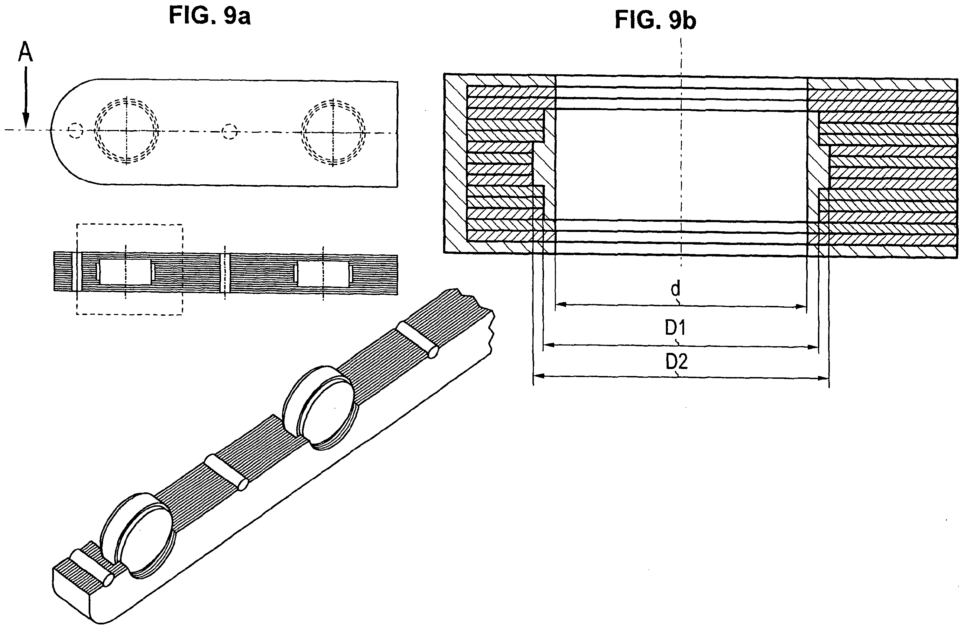

Figur 8b zeigt, wie Figur 8a auch, eine abgestufte Hülse 7, jedoch mit einem dadurch geführten Bolzen 4. Figuren 9a und 9b zeigen eine genauere Darstellung der Blechpakete 2 aus Figuren 8a und 8b in einer seitlichen Ansicht (9a) und einer Schnittansicht (9b).

## Patentansprüche

1. Vorrichtung zum Verbinden von Profilelementen, insbesondere von Metallprofilelementen, umfassend:
wenigstens zwei miteinander zu einem Blechpaket (2) verbundene Bleche (1) mit miteinander fluchtenden Durchführungen (3), und
wenigstens zwei Bolzen (4), wobei
das Blechpaket (2) in zwei zu verbindenden Profilelemente einführbar und mit diesen mittels der wenigstens zwei Bolzen (4) vorzugsweise lösbar verbindbar ist,
**dadurch gekennzeichnet, dass**
die Bleche (1) aus hochfestem Stahl hergestellt sind.

2. Vorrichtung nach Anspruch 1, **dadurch gekennzeichnet, dass** die Bleche (1) verklebt und/oder genietet sind.

3. Vorrichtung nach Anspruch 1 oder 2, **dadurch gekennzeichnet, dass** in den Blechen (1) Nietlöcher (5) für Nieten (6) vorgesehen sind, mittels derer die Bleche (1) zu dem Blechpaket (2) verbunden sind.

4. Vorrichtung nach Anspruch 3, **dadurch gekennzeichnet, dass** die Durchführungen (3) für Bolzen (4) unterschiedlich dimensioniert sind.

5. Vorrichtung nach einem der vorhergehenden Ansprüche, **dadurch gekennzeichnet, dass** die Bleche (1) unterschiedliche und/oder identische Blechstärken aufweisen.

6. Vorrichtung nach einem der vorhergehenden Ansprüche, **dadurch gekennzeichnet, dass** innerhalb des Blechpakets (2) wenigstens eine Hülse (7) angeordnet ist.

7. Vorrichtung nach Anspruch 6, **dadurch gekennzeichnet, dass** die wenigstens eine Hülse (7) abgestuft ist und unterschiedliche Bleche (1) des Blechpakets (2) in unterschiedlichen Abständen von einer Hülsenachse mit Lasten beaufschlagbar sind.

8. Vorrichtung nach Anspruch 6 oder 7, **dadurch gekennzeichnet, dass** die Hülse (7) vorwiegend in einem mittleren Bereich des Blechpakets (2) angeordnet ist.

9. Verwendung einer Vorrichtung nach einem der Ansprüche 1 bis 8 zum Verbinden zweier Profilelemente, insbesondere zweier Metallprofilelemente.

10. Verwendung nach Anspruch 9, **dadurch gekennzeichnet, dass** die Profilelemente Hohlprofile sind.

11. Verwendung nach Anspruch 9 oder 10, **dadurch gekennzeichnet, dass** die Profilelemente Bestandteile einer Maschine, vorzugsweise einer Baumaschine und besonders bevorzugt eines Turmdrehkrans sind.

12. Turmdrehkran, wobei der Turm und/oder der Ausleger des Turmdrehkrans wenigstens zwei Gurte umfasst, die mittels einer Vorrichtung nach einem der Ansprüche 1 bis 9 verbunden sind.

## Claims

1. A mechanism for connecting profile elements, in particular metal profile elements, comprising:
at least two sheet metal plates (1) combined to form a stack (2) of sheet metal plates with mutually aligned apertures (3), and
at least two bolts (4), wherein
the stack (2) can be inserted between two profile elements to be connected and is preferably releasably connectable with these via the at least two bolts (4),
**characterized in that**
the plates (1) are made of high-strength steel.

2. The mechanism according to claim 1, **characterized in that** the plates (1) are cemented and/or riveted together.

3. The mechanism according to claim 1 or 2, **characterized in that** rivet holes (5) for rivets (6) are provided in the plates (1), by means of which the plates (1) are combined to form the stack (2).

4. The mechanism according to claim 3, **characterized in that** the apertures (3) for the bolts (4) have different sizes.

5. The mechanism according to one of the preceding claims, **characterized in that** the plates (1) have different and/or equal thicknesses.

6. The mechanism according to one of the preceding claims, **characterized in that** at least one sleeve (7) is provided within the stack (2).

7. The mechanism according to claim 6, **characterized in that** the at least one sleeve (7) is stepped and that loads can be applied to different plates (1) of stack (2) at different distances from a sleeve axis.

8. The mechanism according to claim 6 or 7, **characterized in that** the sleeve (7) is provided mainly in a middle section of the stack (2).

9. Use of a mechanism according to one of claims 1 to 8 for connecting two profile elements, in particular two metal profile elements.

10. The use according to claim 9, **characterized in that** the profile elements are hollow profiles.

11. The use according to claim 9 or 10, **characterized in that** the profile elements are components of a machine, preferably a construction machine and particularly preferably a tower crane.

12. A tower crane, wherein the tower and/or the jib of the tower crane comprises at least two belts which are connected by means of a mechanism according to one of claims 1 to 9.

## Revendications

1. Dispositif destiné à relier des éléments profilés, notamment des éléments profilés en métal, comprenant :
au moins deux tôles (1) reliées entre elles en un paquet de tôles (2), munies de passages (3) alignés entre eux, et
au moins deux boulons (4),
le paquet de tôles (2) pouvant être introduit dans deux éléments profilés à relier et être reliés à ces derniers de préférence de manière amovible au moyen des au moins deux boulons (4),
**caractérisé en ce que**
les tôles (1) sont fabriquées en acier hautement résistant.

2. Dispositif selon la revendication 1, **caractérisé en ce que** les tôles (1) sont collées et/ou rivetées.

3. Dispositif selon la revendication 1 ou 2, **caractérisé en ce que** des trous de rivet (5) pour des rivets (6) sont ménagés dans les tôles (1), au moyen desquels trous de rivet les tôles (1) sont reliées en paquet de tôle (2).

4. Dispositif selon la revendication 3, **caractérisé en ce que** les passages (3) pour boulons (4) sont différemment dimensionnés.

5. Dispositif selon l'une quelconque des revendications précédentes, **caractérisé en ce que** les tôles (1) présentent des épaisseurs de tôle différentes et/ou identiques.

6. Dispositif selon l'une quelconque des revendications précédentes, **caractérisé en ce qu'**au moins une douille (7) est disposée à l'intérieur du paquet de tôles (2).

7. Dispositif selon la revendication 6, **caractérisé en ce que** l'au moins une douille (7) est étagée et **en ce que** différentes tôles (1) du paquet de tôles (2) peuvent être chargées avec des charges à différents intervalles d'un axe de douille.

8. Dispositif selon la revendication 6 ou 7, **caractérisé en ce que** la douille (7) est principalement disposée dans une zone centrale du paquet de tôles (2).

9. Utilisation d'un dispositif selon l'une quelconque des revendications 1 à 8, destiné à relier deux éléments profilés, notamment deux éléments profilés en métal.

10. Utilisation selon la revendication 9, **caractérisée en ce que** les éléments profilés sont des profilés creux.

11. Utilisation selon la revendication 9 ou 10, **caractérisée en ce que** les éléments profilés sont des composants d'une machine, de préférence d'une machine de construction et de manière particulièrement préférée d'une grue à tour.

12. Grue à tour, la tour et/ou la flèche de la grue à tour comprenant au moins deux sangles qui sont reliées au moyen d'un dispositif selon l'une quelconque des revendications 1 à 9.
